# EUROPÄISCHE PATENTSCHRIFT

(11) **EP 1 771 671 B1**
(45) Veröffentlichungstag und Bekanntmachung des Hinweises auf die Patenterteilung: **14.09.2016**
(21) Anmeldenummer: 05715075.7
(22) Anmeldetag: 08.03.2005
(51) Int. Cl.: F16F 15/134

(54) **ZWEIMASSENSCHWUNGRAD MIT EINER PRIMÄRMASSE, EINEM FEDERSYSTEM UND EINER SEKUNDÄRMASSE**
TWO-MASS FLYWHEEL WITH A PRIMARY MASS, A SPRING SYSTEM AND A SECONDARY MASS
VOLANT A DEUX MASSES, COMPORTANT UNE MASSE PRIMAIRE, UN SYSTEME DE RESSORT ET UNE MASSE SECONDAIRE

(30) Priorität: 07.04.2004 DE 102004017611; 29.07.2004 DE 102004036939
(43) Veröffentlichungstag der Anmeldung: 11.04.2007
(73) Patentinhaber: Rohs, Ulrich,, 52351 Düren (DE)
(72) Erfinder: ROHS, Ulrich, 52351 Düren (DE)
(74) Vertreter: Reuther, Martin
(86) Internationale Anmeldenummer: PCT/DE2005/000410
(87) Internationale Veröffentlichungsnummer: WO 2005/100817

(56) Entgegenhaltungen:
- DE-A1- 3 607 751
- US-A- 5 052 978
- US-A- 5 367 921

## Beschreibung

Die Erfindung betrifft ein Zweimassenschwungrad mit einer Primärmasse, einem Federsystem und einer Sekundärmasse, sowie einer zum Federsystem koaxial gelagerten Mitnahme, die in einem ersten Bereich mit dem Federsystem und in einem zweiten Bereich mit der Sekundärmasse in Wirkverbindung treten kann.

Ein gattungsgemäßes Zweimassenschwungrad ist aus der DE 3721705 A1 bekannt. Hierbei wird die Antriebskraft von der Kurbelwelle über die Primärmasse auf ein Federsystem und von dort über eine Mitnahme auf die Sekundärmasse übertragen. Die Mitnahme hat somit einen ersten Bereich, indem sie mit dem Federsystem und einen zweiten Bereich indem sie mit der Sekundärmasse in Wirkverbindung treten kann. Bei der Entgegenhaltung reibt das Federsystem zum Erzeugen von Dämpfungsenergie an der Primärmasse, die Mitnahme berührt jedoch nur das Federsystem und berührt die Primärmasse nicht.

Die an der Primärmasse reibenden Federn führen zu einer Geräuschentwicklung, der durch Schmierfett entgegengetreten werden muss. Das Schmierfett verringert jedoch die Dämpfungsreibung zwischen den Federn und der Primärmasse. Darüber hinaus führt insbesondere bei Lastwechseln der Anschlag der Federn an der Primärmasse und an der Mitnahme zu einem unerwünschten Verschleiß.

Weiterhin zeigt die DE 36 07 751 A1 ein Zweimassenschwungrad mit einer Primärmasse und einer Sekundärmasse, wobei die Sekundärmasse mit einem Federnsystem zusammenwirkt und ein eingeleitetes Drehmoment von der Primärmasse über Reibelemente mittelbar auf das Federnsystem übertragen wird.

Der Erfindung liegt die Aufgabe zugrunde, ein Zweimassenschwungrad herzustellen, das ein schonendes Zusammenwirken zwischen Primärmasse, Federsystem und Sekundärmasse ermöglicht.

Die Aufgabe wird mit einem gattungsgemäßen Zweimassenschwungrad eimassenschwungrad mit den Merkmalen des Anspruches 1 gelöst, bei dem die Mitnahme einen dritten Bereich aufweist, der mit der Primärmasse in Wirkverbindung treten kann.

Die erfindungsgemäße Mitnahme kann somit ohne Zwischenschaltung der Federn sowohl mit der Primärmasse als auch mit der Sekundärmasse in Wirkverbindung treten. Die Mitnahme erlaubt dadurch eine kontinuierliche Anlage zwischen der Mitnahme und dem Federsystem, wodurch Anschläge zwischen der Mitnahme und dem Federsystem vermieden werden, um dadurch Geräusche und Zerstörungen bei einem Aufprall der Mitnahme auf das Federsystem zu vermeiden.

Um den Anschlag der Primärmasse an der Mitnahme zu dämpfen oder abzufedern, kann die Primarmasse auch zuerst an dem Federsystem anschlagen, dort eine bestimmte Kompression erzeugen und erst anschließend die Mitnahme berühren. Die Primärmasse tritt in diesem Fall an der gleichen Seite wie die Mitnahme in Wirkverbindung mit dem Federsystem. Die Erfindung kann sogar dadurch verwirklicht werden, dass die Primärmasse an einer Seite an das Federsystem anschlägt und anschließend nicht selbst an dieser Seite des Federsystems die Mitnahme berührt sondern dass die Mitnahme vom Federsystem nachgezogen wird. Das Federsystem hat in diesen Fällen vorteilhafter Weise auf der gleichen Seite sowohl eine Anlagefläche für die Primärmasse als auch eine Anlagefläche für die Mitnahme. Alternativ dazu hat die Primärmasse an der gleichen Seite des Federsystems eine Anlagefläche für das Federsystem und eine Anlagefläche für die Mitnahme. Dies führt dazu, dass erst nach einem Aufeinandertreffen von Primärmasse und Federsystem die Primärmasse direkt oder indirekt mit der Mitnahme in Wirkverbindung tritt.

Vorteilhaft ist es, wenn das Zweimassenschwungrad eine erste und eine zweite Mitnahme aufweist. Beim Betrieb des Zweimassenschwungrades dreht die Primärmasse in eine erste Richtung und drückt hierbei die erste Mitnahme gegen das Federsystem. Das Federsystem wirkt wiederum auf die zweite Mitnahme, die die Drehkraft auf die Sekundärmasse überträgt. Bei einem Richtungswechsel der Primärmasse kann die zweite Mitnahme über das Federsystem auf die erste Mitnahme wirken, die dann auf die Sekundärmasse wirkt. Die erste und die zweite Mitnahme können somit kontinuierlich mit dem Federsystem in Verbindung bleiben. Der bisher notwendige Anschlag bei einem Richtungswechsel der Primärmasse auf das Federsystem wird bei dem erfindungsgemäßen Zweimassenschwungrad durch einen Anschlag von der Primärmasse auf die Mitnahme und von der Mitnahme auf die Sekundärmasse ersetzt. Die zweite Mitnahme ist daher vorteilhafter Weise so ausgebildet, dass sie wie die erste Mitnahme in einem ersten Bereich mit dem Federsystem, in einem zweiten Bereich mit der Sekundärmasse und in einem dritten Bereich mit der Primärmasse in Wirkverbindung treten kann.

Eine vorteilhafte Ausgestaltung der erfindungsgemäßen Einrichtung sieht vor, dass die zweite Mitnahme zur ersten im wesentlichen eine identische Form hat. Im Einbau wird die erste Mitnahme dann so eingesetzt, dass sie in eine erste Richtung wirkt während die zweite Mitnahme so eingesetzt wird, dass sie in entgegengesetzter Richtung auf das Federsystem wirkt.

Vorteilhaft ist es, wenn die Primärmasse und die Sekundärmasse einen gemeinsamen Drehpunkt aufweisen und die Mitnahme um diesen Drehpunkt drehbar gelagert ist. Primärmasse, Sekundärmasse und Mitnahmen sind somit konzentrisch gelagert und erlauben hierdurch einen kompakten Aufbau eines Zweimassenschwungrades.

Eine materialsparende Ausführungsform einer Mitnahme sieht vor, dass sie eine im wesentlichen ringförmige Form aufweist. Dies erlaubt es, innerhalb dieser ringförmigen Mitnahme weitere Komponenten eines Zweimassenschwungrades anzuordnen.

Eine Ausführungsform sieht vor, das die Mitnahme von der ringförmigen Form sich radial erstreckende Federhalter aufweist. Diese Federhalter können sich radial nach außen oder radial nach innen erstrecken und dienen dazu, eine Anlage am Federsystem zu bilden.

Weiterhin kann vorgesehen sein das die Mitnahme von der ringförmigen Form sich radial erstreckende Anschläge aufweist. Auch diese Anschläge können radial innerhalb und radial außerhalb des Ringes angeordnet sein. Vorteilhaft erstrecken sich die Federhalter radial nach außen und die Anschläge radial nach innen. Dies erlaubt es, die Federn im radial äußersten Bereich des Zweimassenschwungrades anzuordnen.

Die neue Gestaltung des Zweimassenschwungrades ermöglicht, es ein besonderes Augenmerk auf die Anlageflächen zwischen Primärmasse und Mitnahme sowie zwischen der Mitnahme und der Sekundärmasse zu legen. Es ist daher vorgesehen, dass der dritte Bereich, der mit der Primärmasse in Wirkverbindung treten kann, eine primäre Anlagefläche aufweist. Diese primäre Anlagefläche kann in Wirkrichtung eine schräge Ebene aufweisen. Diese Ebene kann wiederum in radialer oder axialer Richtung schräg angeordnet sein.

Eine weitere Ausführungsform sieht vor, dass die primäre Anlagefläche in Wirkrichtung eine kurvenförmige Anlagefläche aufweist. Eine kurvenförmige Anlagefläche kann beispielsweise die Form eines Ballen haben. In diesem Fall wirkt eine konvexe Anlagefläche der Mitnahme mit einer konkaven Anlagefläche der Primärmasse zusammen, wobei auch die Primärmasse konvex und die Anlagefläche der Mitnahme konkav ausgebildet sein kann. Die Ausbildung der Anlagefläche in axialer und/oder radialer Richtung in Form einer speziellen Kurve ermöglicht es, die Kräfte im Moment der Anlage so abzufangen, dass bei der dynamischen Bewegung des Zweimassenschwungrades optimale Ergebnisse erzielt werden. Dies erlaubt es, durch schräge Ebenen in axialer Richtung Mitnahme und Primärmasse im Moment des Anschlages zueinander zu zentrieren oder gegeneinander zu verspannen.

Vorteilhaft ist es, wenn der dritte Bereich mehrere, vorzugsweise drei oder fünf, Anlageflächen aufweist. Entsprechend ist es vorteilhaft, wenn die Primärmasse mehrere, vorzugsweise drei oder fünf, Anlageflächen aufweist. Das Vorsehen mehrerer Anlageflächen ermöglicht es, die Anlageflächen auf einer Kreislinie, vorzugsweise gleichmäßig, zu verteilen und mehrere kürzere Federn vorzusehen.

An der primären Anlagefläche kann ein Stahlblechteil an ein Gussteil anschlagen. Dies ermöglicht es, die Primärmasse als Gussteil auszubilden und die Mitnahme aus Stahlblech herzustellen.

Vorteilhaft ist es, wenn an der primären Anlagefläche in ein Gussteil ein Stahlblechteil eingesetzt ist. Das Stahlblechteil ermöglicht es, die auftretenden Kräfte auf eine größere Fläche zu verteilen, und das Stahlblechteil ist dazu geeignet, den speziellen dynamischen Anforderungen angepasst in einer besonderen Formgebung ausgebildet zu sein.

Eine besondere Ausführungsvariante sieht vor, dass an der primären Anlagefläche ein federndes Element angeordnet ist. Dies führt dazu, dass die auftreffende Kraft zeitverzögert weitergeleitet wird.

Kumulativ oder alternativ wird vorgeschlagen, dass an der primären Anlagefläche ein dämpfendes Element angeordnet ist. Hierbei wird Kraft in Reibung umgewandelt, um all zu starke Druckkräfte zu vermeiden.

An einer sekundären Anlagefläche wirkt die Mitnahme mit der Sekundärseite zusammen. Für diese Anlagefläche gilt das zur primären Anlagefläche Gesagte entsprechend.

In einer vorteilhaften Ausführungsform ist vorgesehen, dass die Mitnahme gleitend auf einer Lagerfläche gelagert ist. Insbesondere hierbei wird vorgeschlagen, dass die Mitnahme radial auf einer Reibeinrichtung gelagert ist. Dies ermöglicht einen besonders kompakten Aufbau des Zweimassenschwungrades.

Weiterhin wird vorgeschlagen, dass die Mitnahme axial zwischen zwei Gleitlagerflächen gelagert werden kann. Die Auswahl der Gleitlagerflächen in axialer und radialer Richtung erlaubt es, für die Leerlaufentkopplung eine angemessene Grundreibung vorzusehen.

Sofern axiale Gleitlagerflächen vorgesehen sind, können diese federnd ausgebildet sein, um entweder die Mitnahme in axialer Richtung zu positionieren und/oder um eine definierte Reibkraft zu erzeugen. Darüber hinaus wird vorgeschlagen, die Gleitlagerflächen dämpfend auszubilden, indem entsprechende Reibbeläge vorgesehen werden.

Eine vorteilhafte Ausführungsform sieht vor, dass die Lagerfläche von einem L-förmigen Element gebildet ist. Dies erlaubt es dem Element, als radiales und axiales Lager zu wirken. Eine beidseitige axiale Lagerung wird vorteilhafter Weise durch ein U-förmiges Element mit parallelen oder fluchtenden Schenkeln gebildet.

Die Verbindung von Lagerfläche und Mitnahme kann vorteilhafter Weise durch Kleben oder Nieten erfolgen.

Eine vorteilhafte Ausführungsform sieht vor, dass die Lagerfläche an die Mitnahme angespritzt ist. Eine andere Ausführungsform sieht vor, dass die Lagerfläche einen Kunststoffkörper aufweist, der in einer Bohrung gehalten ist.

Vorteilhaft ist es, wenn die Lagerfläche von einem Mehrschichtlager gebildet ist.

Eine günstige Ausführungsform sieht vor, dass die Lagerfläche von einem Kunststoffformteil gebildet ist.

Eine besondere Ausführungsform sieht vor, dass die ersten mit einem Federsystem in Verbindung stehenden Bereiche von zwei Mitnahmen durch Endanschläge begrenzt aufeinander zu bewegbar sind. Diese Endanschläge ermöglichen es, die Komprimierung der Federn auf einen bestimmten Maximalwert zu begrenzen und dadurch auch ein auf Block gehen der Federn zu vermeiden.

Vorteilhaft ist es hierbei, wenn der Endanschlag an einer radial innen liegenden Fläche der Mitnahme angeordnet ist.

Die Endanschläge können durch Guss- oder Blechformteile gebildet sein und auch die Federn können Endanschläge bilden, wenn sie blocktauglich sind. Des weiteren können Kunststoff- oder Gummielemente als Endanschlag dienen. Als Endanschlag kann somit auch ein federndes oder dämpfendes Element vorgesehen sein.

Vorteilhaft ist es, wenn die Mitnahme ein Stahlblech aufweist. Hierbei kann das Stahlblech der Mitnahme voll gehärtet sein oder auch nur gehärtete Bereiche aufweisen.

Vorteilhaft ist es, wenn die Mitnahme gehärtete Elemente aufweist. Diese können einstückig mit der Mitnahme ausgebildet sein oder als Ein- bzw. Vorsätze beispielsweise dazu dienen, die Federn in Position zu halten oder mit Primär- oder Sekundärmasse zusammen zuwirken.

Vorteilhaft ist es, wenn die Mitnahme eine auf das Federsystem abgestimmte Formgebung aufweist. Hierbei ist es beispielsweise vorteilhaft, wenn die Mitnahme eine an ineinander liegende Federn angepasste gestufte Formgebung aufweist.

Vorteilhaft ist es, wenn die Mitnahmen einen Federhalter aufweisen, der in das Federsystem hinein ragt. Als Alternative kann jedoch auch ein Federhalter vorgesehen sein, der mit radial innen liegenden Bereichen eine Anlage für das Federsystem bildet.

Der Federhalter kann hierbei einstückig mit der Mitnahme ausgebildet sein. Vorteilhaft ist es für verschiedene Einsatzzwecke, wenn der Federhalter von der Mitnahme lösbar ausgebildet ist.

Ein spezielles Zusammenwirken zwischen Mitnahme und Federsystem wird dadurch erzielt, dass der erste mit dem Federsystem in Wirkverbindung stehende Bereich der Mitnahme in einem Winkel zur Stirnseite der Feder ausgebildet ist. Dies ermöglicht es auch, die Feder leichter zwischen zwei Mitnahmen einzusetzen.

Je nach Ausführungsvariante kann vorgesehen sein, dass der erste mit einem Federsystem in Wirkverbindung stehende Bereich einer Mitnahme beabstandet zum Federsystem angeordnet ist.

Das Federsystem weist vorteilhafter Weise mehrere verteilt auf einer Kreislinie angeordnete Federn auf. Besonders vorteilhaft ist es, wenn das Federsystem radial ineinander angeordnete Federn aufweist. Durch die Auswahl und Anordnung der Federn kann eine optimale Abstimmung des Zweimassenschwungrades an die jeweiligen Gegebenheiten erzielt werden.

Über die Anordnung der Federn und die Federcharakteristik hinaus kann das Federsystem auch dadurch angepasst werden, dass radial ineinanderliegende Federn unterschiedliche Längen aufweisen.

In einer vorteilhaften Ausführungsform wird darauf geachtet, dass die Federn so gehalten sind, dass sie auch im Betrieb des Zweimassenschwungrades die Primärseite nicht berühren. Dies wird insbesondere durch die Anordnung von mehreren auf einer Kreislinie mit Abstand zwischen einander angeordneten Federn erreicht, wobei mit sechs oder vorzugsweise neun Federn besonders gute Ergebnisse erzielt wurden.

Ein weiterer Aspekt der Erfindung, der auch ohne die zuvor beschriebenen Merkmale für sich eine erfinderische Neuerung darstellt, sieht vor, dass die Primärmasse ein Stahlgusselement und ein Stahlblechelement aufweist. Hierbei wird vorgeschlagen, dass das Stahlgusselement über einen Presssitz mit dem Stahlblechelement in Verbindung steht. Als Alternative können die Teile jedoch auch durch ein Gewinde, durch Verstemmen, Nieten oder eine Schweißnaht miteinander in Verbindung stehen. Das Verstemmen von Stahlgusselement und Stahlblechelement ist eine kostengünstige formschlüssige Verbindung, die sehr gut dazu geeignet ist, Axialschwingungen und Drehmomente aufzunehmen ohne die Teile zu schwächen.

Eine besondere Ausführungsform sieht vor, dass das Stahlblechelement in das Stahlgusselement eingegossen ist.

Vorteilhaft ist es, wenn das Stahlgusselement und das Stahlblechelement in axialer Richtung nebeneinander angeordnet sind. Dies ermöglicht es die beiden Teile auf einfache Art und Weise miteinander in Verbindung zu bringen.

Aus dynamischen Gründen ist es vorteilhaft, wenn das Stahlgusselement radial außerhalb des Stahlblechelements angeordnet ist, da hierdurch auf einfache Art und Weise am Umfang des Zweimassenschwungrades eine größere Masse bereitgestellt werden kann.

Besonders gute Ergebnisse wurden mit einem Zweimassenschwungrad erzielt, bei dem die Verbindungsstelle zwischen Stahlgusselement und Stahlblechelement radial außerhalb einer Kurbelwellenverschraubung angeordnet ist.

Außerdem wird vorgeschlagen, dass zumindest ein Teil des Stahlgusselementes radial außerhalb des Federsystems angeordnet ist.

Um im radial äußeren Bereich eine besonders große Masse bereitstellen zu können, wird vorgeschlagen, dass die axiale Breite des Stahlgusselementes größer ist als die axiale Breite des Federsystems. Vorteilhaft ist es weiterhin, wenn das Stahlgusselement eine Ansatzstelle für einen Zahnkranz aufweist. Diese Ansatzstelle ist vorzugsweise gestuft ausgebildet.

Darüber hinaus kann das Stahlgusselement eine Gebermarkierung aufweisen.

Vorteilhaft ist es, wenn das Zweimassenschwungrad eine Reibeinrichtung aufweist. Hierbei wird vorgeschlagen, dass die Reibeinrichtung radial innerhalb des Federsystems angeordnet ist.

Diese Reibeinrichtung kann ungeschmiert ausgeführt sein. Vorteilhaft ist es jedoch, wenn sie mit Fett geschmiert ist.

Zur vorliegenden Erfindung wird vorgeschlagen, dass die Reibeinrichtung sich im Betrieb verspannende Keile aufweist. Diese Keile sind zwischen einer primärseitigen Anlagefläche und einer sekundärseitigen Anlagefläche angeordnet und verspannen sich beim Verdrehen der Anlageflächen zueinander.

Vorteilhaft ist es, wenn die Reibeinrichtung mindestens zwei, vorzugsweise drei oder mehr Keile aufweist. Diese Keile sollten gleichmäßig verteilt auf einer Kreisfläche angeordnet sein, damit sich radial wirkende Kräfte gegeneinander aufheben.

In einer speziellen Ausführungsform ist vorgesehen, dass die Reibeinrichtung ein mit der Primärmasse verbundenes Exzenterblech aufweist. Vorteilhaft ist es, wenn sie darüber hinaus eine mit der Sekundärseite verbundene Zentrierung aufweist. Diese Zentrierung kann durch Nieten, Pressen oder Schweißen mit der Sekundärseite verbunden sein.

Eine vorteilhafte Ausführungsform sieht vor, dass die Zentrierung mit einem Dichtblech in Verbindung steht. Die Verbindung zwischen der Zentrierung und dem Dichtblech wird auf einfache Art und Weise durch bördeln erzeugt. Zusätzlich oder alternativ kann die Zentrierung auch an das Dichtblech geklebt werden. In einer Ausführungsform sind umgebogene Blechnasen vorgesehen, um die Zentrierung mit dem Dichtblech zu verbinden. Weiterhin kann die Verbindung auch durch Pressen oder Schweißen erfolgen.

Da das Dichtblech mit der Sekundärseite in Verbindung steht und das exzenterblech mit der Primärseite, muss bei einer geschmierten Reibeinrichtung eine Dichtung zwischen diesen Blechen vorgesehen sein. Eine besonders vorteilhafte Ausführungsform schlägt vor, dass zwischen Dichtblech und Exzenterblech ein radialer Spalt vorgesehen ist. Dies führt dazu, dass austretendes Fett durch Zentrifugalkräfte im radialen Spalt zurück in die Reibeinrichtung gedrückt wird.

Vorteilhaft ist es, wenn das Dichtblech axial auf einen Keil wirkt. Das Dichtblech kann hierbei zur axialen Zentrierung der Keile dienen und für eine definierte Reibung zwischen der Sekundärmasse und den Keilen sorgen.

Die Reibeinrichtung mit ihren unterschiedlichen vorteilhaften Merkmalen stellt auch für sich ohne die übrigen Merkmale eines Zweimassenschwungrades eine erfindungswesentliche Neuerung dar.

Ein weiterer Aspekt der Erfindung, der für beliebige Zweimassenschwungräder besonders vorteilhaft ist, sieht vor, dass die Primärmasse mit einem Zentralflansch in Verbindung steht und Bohrungen zur Befestigung der Primärmasse mittels Schrauben an einer Kurbelwelle aufweist, wobei der Zentralflansch mit den Bohrungen fluchtende Öffnungen aufweist, die größer sind als ein Schraubenkopf.

Es hat sich herausgestellt, dass beim Anschrauben eines Flansches an der Primärmasse mit den Schrauben, die zur Befestigung der Primärmasse an der Kurbelwelle dienen, sich der Zentralflansch leicht verbiegt. Dadurch kann bei der Befestigung des Zweimassenschwungrades an der Kurbelwelle das gesamte Zweimassenschwungrad durch unfachmännische Handhabung beschädigt werden. Es wird daher vorgeschlagen, die zur Befestigung der Primärmasse verwendeten Schrauben nicht dazu zu verwenden, den Zentralflansch mit der Primärmasse des Zweimassenschwungrades zu verbinden.

Zur Befestigung des Zentralflansches, direkt oder indirekt, an der Primärmasse des Zweimassenschwungrades können erfindungsgemäß verschiedenartigste Befestigungsmöglichkeiten gewählt werden. Vorteilhaft ist es, den Zentralflansch an der Primärmasse anzunieten. Eine derartige Nietverbindung ist auch dazu geeignet, zwischen dem Zentralflansch und der Primärmasse angeordnete Teile auf einfache Art und Weise festzuhalten.

Insbesondere die neue Befestigungsart des Zentralflansches an der Primärmasse, erschließt die Verwendung unterschiedlicher Materialien zur Herstellung des Zentralflansches. Vorteilhaft ist es, wenn der Zentralflansch ein Blechteil ist. Je nach Ausführungsvariante kann der Zentralflansch jedoch auch ein Gussteil oder ein Sinterteil sein. Alle diese Ausführungsarten eignen sich dazu, am Zentralflansch ein Lager für die Sekundärmasse vorzusehen.

Eine spezielle Ausführungsform des Zweimassenschwungrades sieht vor, dass das Federsystem mehrere Federn und mindestens einen Fliegerring aufweist, der die Federn gegen Radialkräfte hält. Ein derartiger Fliegerring erlaubt es, kürzere Federn zu verwenden, da diese vom Fliegerring zu einer gemeinsam wirkenden Feder zusammen gehalten werden.

Vorteilhaft ist es, wenn der Fliegerring Ausbuchtungen aufweist, mit denen er axial gelagert ist. Als Alternative zu Ausbuchtungen können auch Durchsetzungen verwendet werden, um den Fliegerring nur in bestimmten definierten Bereichen mit benachbarten Teilen in Berührung zu bringen. Die beschriebenen Bereiche können Lagermaterial aufweisen, das die Reibung zu den benachbarten Teilen reduziert.

Vorteilhaft ist es, wenn der Fliegerring Einsätze aufweist, mit denen er axial gelagert ist. Derartige Einsätze können aus einem anderen Material hergestellt sein als der Fliegerring und sie haben den Vorteil, dass sie einerseits über die Fläche des Fliegerrings vorstehen können und andererseits es erlauben, unabhängig von der Materialwahl des Fliegerrings aus einem speziellen, auf die Lagerfunktion abgestimmten Material hergestellt zu sein.

Eine einfache, kostengünstige Lagerung kann dadurch erzielt werden, dass Einsätze in Bohrungen im Fliegerring gehalten werden. Diese Einsätze können kraft- oder formschlüssig mit dem Fliegerring in Verbindung stehen und beispielsweise einfach in Bohrungen im Fliegerring eingedrückt sein.

Vorteilhaft ist es, wenn die Einsätze Kunststoffformteile aufweisen. Derartige Kunststoffformteile sind kostengünstig herzustellen und die Wahl des Kunststoffmaterials kann optimal an die Lagerbedingungen angepasst sein.

Eine besonders vorteilhafte Ausgestaltung sieht vor, dass der Fliegerring zwei miteinander verbundene Ringteile aufweist. Dies erhöht die Stabilität und verbessert die axiale Lagerung. Als Verbindung der Ringteile des Fliegerringes können Nieten verwendet werden.

Hierbei kann vorgesehen sein, dass die Ringteile eine nahezu identische Form aufweisen. Dies ermöglicht eine kostengünstige Herstellung und vereinfacht den Aufbau des Zweimassenschwungrades.

Es wird weiterhin vorgeschlagen, dass die Ringteile beidseitig der Mitnahme angeordnet sein können. Die Mitnahme hat somit auf beiden Seiten einen Teil des Fliegerrings und zwischen Mitnahme und Fliegerring können jeweils Lager vorgesehen sein.

Als Alternative kann auch vorgesehen sein, dass die Mitnahme zweiteilig ausgeführt wird und der Fliegerring zwischen zwei Teilen der Mitnahme angeordnet ist.

Vorteilhaft ist es in beiden Ausführungsvarianten, wenn zwischen dem Fliegerring und der Mitnahme ein Gleitkörper angeordnet ist. Ein derartiger Gleitkörper ist vorteilhafter Weise scheibenförmig ausgebildet, um als Axiallager zu wirken. Ein abgewinkelter Ansatz oder ein zweiter Ring können radiale Lagerfunktionen übernehmen.

Der Fliegerring kann insbesondere als kompakte Einheit zusammen mit den Federn und den Mitnahmen stabil zwischen den als Gehäuse wirkenden Primär- und Sekundärmassen angeordnet sein. Um bei axialen Schwingungen Berührungen zwischen dieser Baueinheit und der Primär- oder Sekundärmasse zu vermeiden wird vorgeschlagen, dass zwischen dem Fliegerring und der Primär- und/oder Sekundärmasse ein Gleitkörper angeordnet ist. Diese Gleitkörperfunktion kann vorteilhafter Weise der Gleitkörper übernehmen, der auch zwischen Fliegerring und Mitnahmen für eine Gleitlagerung sorgt.

Um am gesamten Umfang des Zweimassenschwungrades eine Gleitlagerung zu bewirken, wird vorgeschlagen, dass der Gleitkörper ein Ring ist.

Eine auf die dynamischen Anforderungen des Zweimassenschwungrades abgestimmte Ausführungsform sieht vor, dass der Gleitkörper radial innerhalb des Federsystems angeordnet ist und besonders bevorzugt ist der Gleitkörper zwischen dem Federsystem und einer Dämpfungseinrichtung positioniert.

Auch die Merkmale des Fliegerringes bilden für sich auch ohne die Merkmale des restlichen Zweimassenschwungrades eine eigenständige erfinderische Idee, die auf beliebige Zweimassenschwungräder übertragbar ist.

In folgendem wird die Erfindung anhand von Ausführungsbeispielen näher beschrieben. Es zeigt
- Figur 1: eine Draufsicht auf ein teilweise geschnitten dargestelltes Zweimassenschwungrad,
- Figur 2: eine Draufsicht auf das in Figur 1 gezeigte Zweimassenschwungrad mit Darstellung der Schnittlinien zu den in den Figuren 3 bis 6 gezeigten Schnitten,
- Figur 3: eine Ansicht des in Figur 1 gezeigten Zweimassenschwungrades längs der Schnittlinie 60-60,
- Figur 4: eine Ansicht des in Figur 1 gezeigten Zweimassenschwungrades längs der Schnittlinie 40-40,
- Figur 5: eine Ansicht des in Figur 1 gezeigten Zweimassenschwungrades längs der Schnittlinie 20-20,
- Figur 6: eine Ansicht des in Figur 1 gezeigten Zweimassenschwungrades längs der Schnittlinie rechts-rechts,
- Figur 7: eine schematische perspektivische Darstellung eines Ausschnitts des in Figur 1 gezeigten Zweimassenschwungrades,
- Figur 8: eine teilweise geschnittene Ansicht des Zweimassenschwungrades mit teilweise komprimierten Federn,
- Figur 9: eine teilweise geschnittene Ansicht des Zweimassenschwungrades mit vollkomprimierten Federn,
- Figur 10: ein Detail aus Figur 9 zur Darstellung des Anschlags einer Mitnahme an der Primärmasse,
- Figur 11: ein Detail aus Figur 9 zur Darstellung der Anlage einer Feder an einer Mitnahme,
- Figur 12: ein Detail aus Figur 9 zur Darstellung der Anlage einer Mitnahme an der Sekundärmasse,
- Figur 13: eine alternative Ausführungsform eines Zweimassenschwungrades mit einer gestuft ausgebildeten Anlagefläche zwischen Mitnahme und Feder,
- Figur 14: das in Figur 13 markierte Detail zur Anlage zweier Mitnahmen aneinander und der Mitnahme an einer Feder,
- Figur 15: einen Ausschnitt einer Mitnahme im Bereich der Federanlagefläche,
- Figur 16: eine Ansicht der in Figur 15 gezeigten Mitnahme längs der Linie AA,
- Figur 17: eine Ansicht der in Figur 15 gezeigten Mitnahme längs der Schnittlinie BB,
- Figur 18: eine Ansicht zweier nebeneinander angeordneter Mitnahmen im Schnitt,
- Figur 19: eine Teilansicht des ringförmigen Teils einer Mitnahme,
- Figur 20: einen Ausschnitt aus Figur 19,
- Figur 21: eine alternative Ausführungsform eines Zweimassenschwungrades mit nur drei Federn,
- Figur 22: eine geschnittene Darstellung des in Figur 21 gezeigten Zweimassenschwungrades,
- Figur 23: eine Darstellung einer Abwicklung einer Draufsicht auf die in Figur 21 gezeigten Federn bei Entlastung der Federn,
- Figur 24: eine Darstellung einer Abwicklung einer Draufsicht auf die in Figur 21 gezeigten Federn bei belasteten Federn.

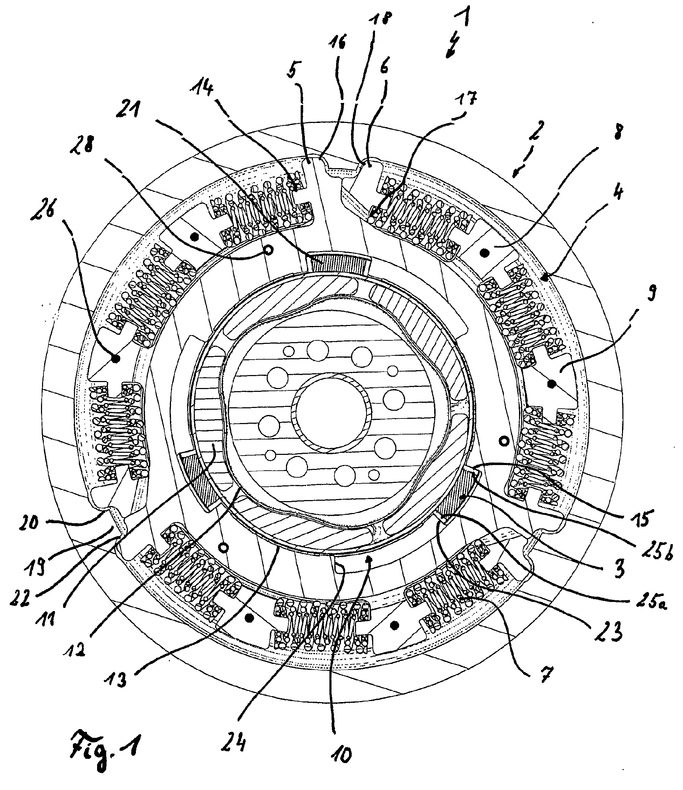

Das in Figur 1 gezeigte Zweimassenschwungrad 1 dient als mechanischer Torsionsschwingungsdämpfer und es reduziert die Drehschwingungen zwischen Motor und Antriebsstrang. Das im Ausführungsbeispiel dargestellte Zweimassenschwungrad wurde für einen 1,8 l Dieselmotor mit 320 Nm und 91 kW konzipiert. Ziel war es, die Drehbeschleunigungen am Getriebeeingang auf weniger als 500 rad/sec² zu reduzieren.

Das Zweimassenschwungrad besteht im Wesentlichen aus der Primärmasse 2, der Sekundärmasse 3 und einem Federsystem 4. Zwischen der Primärmasse 2 und der Sekundärmasse 3 sind über das Federsystem 4 miteinander in Verbindung stehende Mitnehmer 5 und 6 angeordnet. Das Federsystem 4 besteht aus neun einzelnen Federn 7, von denen jeweils drei in Reihe geschaltet sind und durch Flieger 8, 9 gehalten werden. Radial innerhalb der Mitnahmen 5, 6 und der Flieger 8, 9 ist eine Reibeinrichtung 10 vorgesehen. Die Reibeinrichtung 10 besteht aus fünf Keilen 11, die zwischen einem mit der Primärmasse 2 verbundenen Exzenterblech 12 und einem als Zentrierung 13 dienenden umlaufenden Zentrierblech angeordnet sind.

Die beschriebene Anordnung hat zur Folge, dass jede der beiden Mitnahmen 5, 6 in einem ersten Bereich 14 mit einer Feder 7 des Federsystems 4 zusammenwirkt und in einem zweiten Bereich 15 mit der Sekundärmasse 3 zusammenwirkt. In einem dritten Bereich 16 können die Mitnahmen 5 bzw. 6 mit der Primärmasse 2 in Wirkverbindung treten. In der Figur 1 ist die erste Anlagefläche der ersten Mitnahme 5 mit der Bezugsziffer 14, die zweite Anlagefläche mit der Bezugsziffer 15 und die dritte Anlagefläche mit der Bezugsziffer 16 bezeichnet. Von den Mitnahmen 6 sind in der Figur 1 nur die erste Anlagefläche 17 und die dritte Anlagefläche 18 zu erkennen.

Sofern nun die Primärmasse 2 relativ zur Sekundärmasse 3 in Uhrzeigerrichtung bewegt wird, trifft eine von der Primärmasse 2 radial nach innen sich erstreckende Nase 19 mit ihrer rechten Anlagefläche 20 auf den dritten Bereich 18 der Mitnahme 6 und drückt dadurch den ersten Bereich 17 der Mitnahme 6 gegen die Feder 7. Die Feder 7 drückt zunächst auf den Flieger 8 und dann über eine weitere Feder auf den Flieger 9 und über die dritte Feder auf die andere Mitnahme 5. Hierdurch wird die Mitnahme 5 in ihrem zweiten Bereich 15 gegen die Sekundärmasse 3 gedrückt.

Sofern die Sekundärmasse 3 festgehalten wird, werden die Federn 7 des Federsystems 4 komprimiert und Energie gespeichert, die an die Sekundärmasse 3 abgegeben werden kann.

Die Primärmasse 2 hat im vorliegenden Ausführungsbeispiel drei Nasen 19 und die Sekundärmasse 3 hat drei Vorsteher 21, sodass die beschriebene Wirkungskette am Umfang des Zweimassenschwungrades an drei Stellen gleichermaßen vor sich geht. In der Figur sind die sich entsprechenden Teile jeweils nur mit einer Bezugsziffer bezeichnet.

Wenn nun aus der beschriebenen Position die Primärmasse 2 wieder zurück entgegen der Uhrzeigerrichtung in die Ausgangsposition bewegt wird, drängen die Federn 7 die Mitnahme 6 ebenfalls in entgegengesetzter Uhrzeigerrichtung wieder in die Ausgangsposition zurück, wobei sich die Federn 7 entspannen.

Wird die Primärmasse 2 nun weiter in entgegengesetzter Uhrzeigerrichtung gedreht, drückt die linke Anlagefläche 22 der Nase 19 auf den dritten Bereich 16 der Mitnahme 5. Die Mitnahme 5 drängt nun die Federn 7 des Federsystems 4 zusammen und drückt die andere Mitnahme 6 gegen die Vorsteher 21 der Sekundärmasse 3. Hierbei trifft eine Anlagefläche 23 der Mitnahme 6 auf einen Vorsteher 21 der Sekundärmasse 3.

Sofern die Sekundärmasse 3 festgehalten wird, werden die Federn 7 solange zusammengedrückt, bis nicht nur die zweite Mitnahme 6 mit ihrer Anlagefläche 23, sondern zusätzlich die erste Mitnahme 5 mit einer Anlagefläche 24 auf den Vorsteher 21 der Sekundärmasse 3 trifft.

Um das Auftreffen der Mitnahmen mit ihren Anlageflächen 23 und 24 sowie dem zweiten Bereich 15 am Vorsteher 21 abzufedern ist beidseitig des Vorstehers 21 ein Gummipolster 25a bzw. 25b vorgesehen.

Bei einem Verdrehen der Primärmasse 2 relativ zur Sekundärmasse 3 wird auch das mit der Primärmasse 2 in Verbindung stehende Exzenterblech 12 relativ zu dem mit der Sekundärmasse 3 in Verbindung stehenden Zentrierblech 13 bewegt. Hierbei drückt das Exzenterblech 12 gegen die Keile 11 und es entsteht Reibung zwischen den Keilen 11 und dem Zentrierblech 13. Bei einer ruckartigen Bewegung zwischen Exzenterblech 12 und Zentrierblech 13 werden die Keile derart gegen das Zentrierblech 13 gepresst, dass eine direkte Kraftübertragung von der Primärseite zur Sekundärseite erfolgen kann. Das Exzenterblech 12 und die mit ihm zusammen wirkenden Keile 11 werden je nach Anforderung an das Zweimassenschwungrad individuell ausgelegt.

Über das bisher Beschriebene sind in der Figur 1 noch Nieten 26 zu erkennen, die zwei identische Blechteile eines Fliegers 8 bzw. 9 zusammenhalten. Außerdem sind in der Mitnahme 5 Bohrungen mit eingesteckten Kunststoffkörper 28 vorgesehen, damit die Mitnahmen 5 und 6 nicht aneinander schleifen, sondern nur über die als Kunststoffformteil ausgebildeten Kunststoffkörper 28 miteinander in Verbindung treten können.

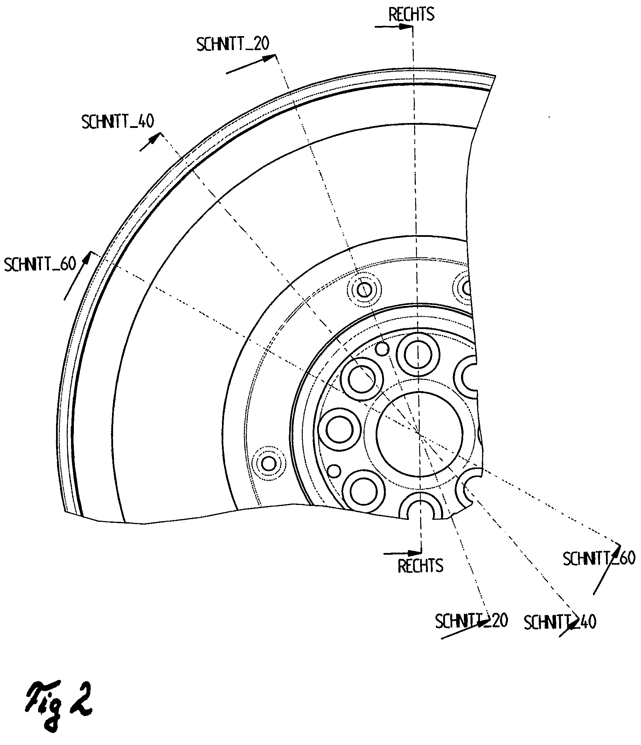

Die Figuren 2 bis 6 verdeutlichen den Aufbau des in Figur 1 gezeigten Zweimassenschwungrades durch vier radiale Schnitte, deren Position in Figur 2 gezeigt ist. Die Schnitte zeigen zunächst deutlich die Form der Primärmasse 2. Die Primärmasse besteht aus einem Gussring 29 und einer Stahlscheibe 30. Der radial außenliegende Gussring ist über einen 31 mit der radial innenliegenden Stahlscheibe 30 verbunden. Dies ermöglicht eine günstige Herstellungsweise der Primärmasse 2 bei gleichzeitig großem Massenträgheitsmoment. Der Gussring 29 hat eine gestufte radial außenliegende Umfangsfläche 32, auf die ein Zahnkranz 33 aufgeschrumpft ist. Radial weiter innen ist eine Gebermarke 34 vorgesehen. Das Gussteil hat eine mehrfach gestufte radial innenliegende Umfangsfläche 35, die mit der im äußeren Bereich 36 der ebenfalls gestuft ausgebildeten Sekundärmasse 3 einen z-förmigen Spalt 37 bildet.

Die Stahlscheibe 30 besteht aus einem Stahlblech mit einheitlicher Blechstärke, das mehrmals abgewinkelt ist, sodass am Presssitz 31 die Ansatzstelle zum Gussring 29 axial neben der Feder 7 angeordnet ist, während das radial innenliegende Ende der Stahlscheibe 30 etwa auf axialer Höhe der Federnmitte radial innerhalb des Federsystems 4 angeordnet ist.

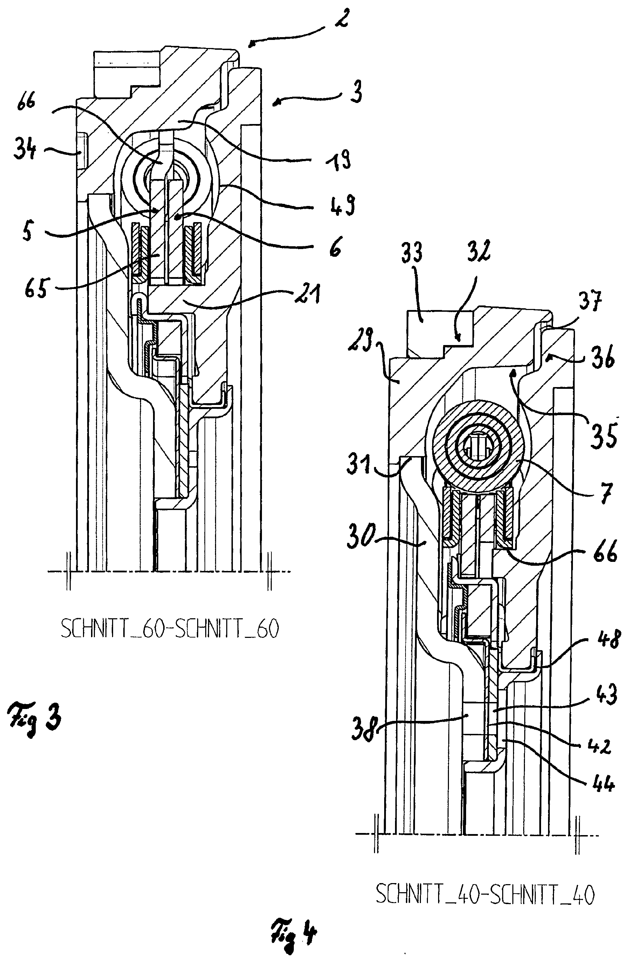

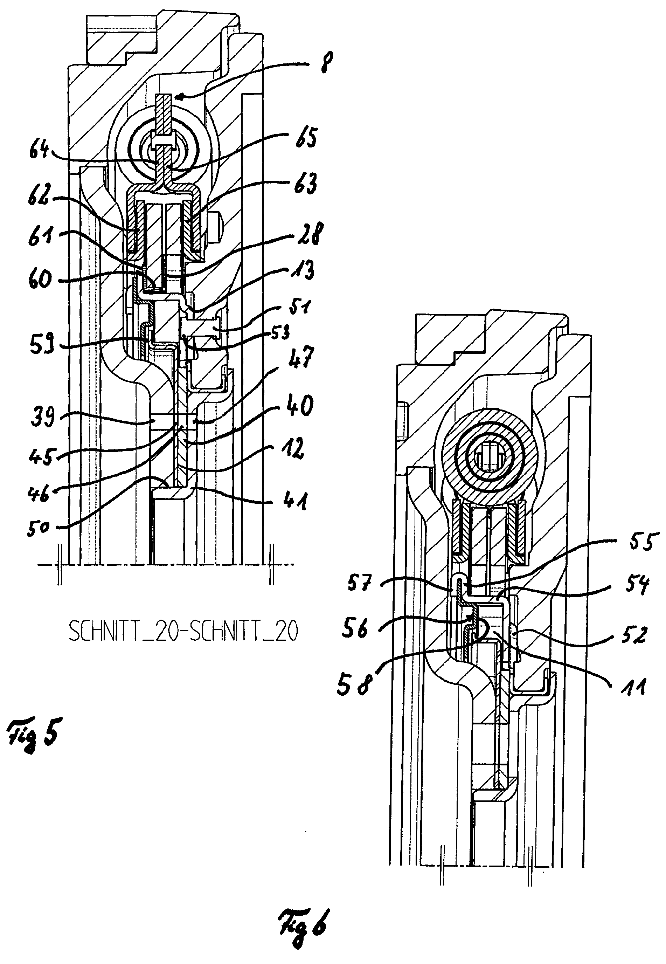

Bei einem Vergleich der Figur 3 mit den Figuren 4, 5 und 6 ist auch die Nase 19 der Primärmasse 2 in Figur 3 gut zu erkennen. Radial innen sind an der Stahlscheibe 30 der Primärmasse 2 acht Bohrungen 38 für Schrauben (nicht gezeigt) zur Befestigung des Zweimassenschwungrades 1 an einer Kurbelwelle (nicht gezeigt) vorgesehen. Außerdem sind in der Stahlscheibe 30 der Primärmasse 2 Bohrungen 39 (vgl. Figur 5) vorgesehen, die es ermöglichen mittels Nieten (nicht gezeigt) weitere Elemente an der Primärmasse 2 zu befestigen.

Mittels dieser Bohrungen 39 sind am radial innenliegenden Bereich der Primärmasse 2 mittels einer Nietverbindung von links nach rechts zunächst das Exzenterblech 12, dann ein Schraubenkopfanlageblech 40 und schließlich ein Zentralflansch 41 befestigt. Das Exzenterblech 12 und das Schraubenkopfanlageblech 40 haben mit den Bohrungen 38 der Stahlscheibe 30 fluchtende Bohrungen 42 und 43, deren Durchmesser etwa dem Durchmesser der Bohrungen 38 in der Primärmasse 2 entspricht. Der Zentralflansch 41 hat mit den Bohrungen 38 der Primärmasse, 42 des Exzenterblechs und 43 des Schraubenkopfanlageblechs fluchtende Bohrungen 44, die jedoch einen weit größeren Durchmesser haben.

Zusätzlich zu den beschriebenen Bohrungen sind für die Nietverbindung kleinere mit der Bohrung 39 fluchtende Bohrungen 45 im Exzenterblech 12 sowie Bohrungen 46 im Schraubenkopfanlageblech 40 und Bohrungen 47 im Zentralflansch 41 vorgesehen.

Die großen Bohrungen 44 im Zentralflansch 41 erlauben es, Schrauben mit ihrem Schaft in die fluchtenden Bohrungen 43 des Schraubenkopfanlageblechs, die Bohrungen 42 im Exzenterblech 12 und die Bohrungen 38 der Primärmasse 2 so einzuführen, dass ihr Schraubenkopf innerhalb der großen Bohrungen 44 des Zentralflansches am Schraubenkopfanlageblech 40 anliegen. Dies führt dazu, dass auch bei einem kräftigen Anziehen dieser Schrauben beim Anschrauben des Zweimassenschwungrades an eine Kurbelwelle der Schraubenkopf keinen Druck auf den Zentralflansch 41 ausüben kann. Der Schraubenkopf liegt ausschließlich am Schraubenkopfanlageblech 40 an und presst das Schraubenkopfanlageblech 40, das Exzenterblech 12 und die Primärmasse 2 gegen die Kurbelwelle. Der Zentralflansch 41 wird somit nur durch die Nietverbindung an der Bohrung 47 mit der Primärmasse 2 verbunden.

In seinem radial äußeren Bereich hält der Zentralflansch 41 zwischen dem Flansch und dem Schraubenkopfanlageblech 40 eine laufende U-förmige Lagerschale 48 und in der Lagerschale 48 ist relativ zum Zentralflansch 41 die Sekundärmasse 3 rotationsbeweglich angeordnet.

Die Sekundärmasse 3 besteht aus einem Gussteil, das radial innerhalb des Federsystems 4 am Umfang gleichmäßig verteilte sich axial zur Primärmasse 2 erstreckende Vorsteher 21 aufweist. Im Bereich des Federsystems 4 hat die Sekundärmasse 3 auf ihrer dem Federsystem 4 zugewandten Seite eine kreisbogenförmige Ausnehmung 49, die eine Bauweise des Zweimassenschwungrades 1 mit minimaler axialer Erstreckung ermöglicht. Radial weiter außen weist die Sekundärmasse einen gestuften äußeren Bereich 36 auf, der mit der gestuften radial innen liegenden Umfangsfläche 35 der Primärmasse 2 den bereits beschriebenen z-förmigen Spalt 37 bildet.

Das Schraubenkopfanlageblech 40 ist ein ebenes Blech, das etwa die Stärke des Zentralflanschs 41 aufweist und zwischen dem Exzenterblech 12 und dem Zentralflansch 41 liegt. Das Exzenterblech 12 ist im Wesentlichen topfförmig ausgebildet und es hat zwischen zwei sich radial erstreckenden Bereichen eine Kurvenform mit fünf Vertiefungen, die zur Aufnahme der Keile 11 dienen.

Der Zentralflansch 41 hat in seinem radial innersten Bereich eine sich axial erstreckende Fläche 50, die der Positionierung des Zentralflansches 41 relativ zum Schraubenkopfanlageblech 40, dem Exzenterblech 12 und der Stahlscheibe 30 dient.

An der Sekundärmasse 3 ist mit Nieten 51 das Zentrierblech 13 befestigt. Das Zentrierblech 13 hat einen im Wesentlichen Z-förmigen Querschnitt und die Anlagefläche an der Sekundärmasse 3 weist acht Vertiefungen 52 für jeweils acht Köpfe 53 der Nieten 51 auf. Der sich axial erstreckende Bereich 54 des Zentrierblechs 13 dient radial innen als Anlagefläche für die Keile 11 und der sich hieran anschließende, sich radiale erstreckende Bereich 55 dient unter anderem zum Halten eines Dichtbleches 56. Dieses Dichtblech 56 wird durch umgebördelte Nasen 57 des Zentrierblechs 13 gehalten. Das Dichtblech 56 hat einen sich radial erstreckenden Bereich 58 zur Führung der Keile 11. Dieser Bereich 58 kann auch mit einer Reibfläche (nicht gezeigt) versehen sein. Das Dichtblech 56 erstreckt sich vom Bereich 58 weiter radial nach innen, sodass zwischen dem Dichtblech 56 und dem Exzenterblech 12 ein radialer Spalt 59 entsteht.

Dies führt dazu, dass die Keile 11 in einer geschlossenen ringförmigen Kammer zwischen Exzenterblech 12, Zentrierblech 13 und Dichtblech 56 angeordnet sind und diese Kammer bis auf den sich radial erstreckenden Spalt 59 zwischen Dichtblech 56 und Exzenterblech 12, beispielsweise für die Aufnahme von Fett, abgedichtet ist. Durch die am Zweimassenschwungrad 1 wirkenden Zentrifugalkräfte wirkt der sich radial erstreckende Spalt 46 als Dichtung, da in den Spalt 59 gelangendes Fett durch die Zentrifugalkraft wieder zurück in die Kammer gedrückt wird.

Radial außerhalb des Zentrierblechs 13 sind zwei Mitnahmen 5 und 6 angeordnet. Diese Mitnahmen 5 und 6 haben radial innenliegende Anlagebereiche 60, an die L-förmige Kunststofflager 61 angespritzt sind. Die Mitnahmen 5 und 6 liegen somit in beanstandeten Anlagebereichen 60 am Zentrierblech 13 an und werden durch dieses gehalten. Das Kunststofflager 61 ist L-förmig ausgebildet, um die Mitnahmen 5, 6 jeweils radial und axial zu lagern. Zwischen den Mitnahmen wirken die bereits beschriebenen Kunststoffkörper 28 als Lagerung, damit sich die aus Stahlblech hergestellten Mitnahmen 5 und 6 nicht direkt berühren.

Radial weiter außen liegen die Mitnahmen 5 und 6 zwischen zwei im Querschnitt L-förmigen Lagerringen 62, 63. Diese L-förmigen Lagerringe 62, 63 liegen jeweils zwischen einer Mitnahme 5, 6 und den Ringteilen 64 und 65 des Fliegerringes 8. Außerdem kann der sekundärmassenseitige Lagerring 63 an einer radial äußeren Anlagefläche 66 der Vorsteher 21 an der Sekundärmasse anliegen. Der Fliegerring 8 ist somit in axialer und radialer Richtung über die Lagerringe 62 und 63 an den Mitnahmen 5, 6 gehalten.

Radial noch weiter außen liegen die Fliegerringe 8, 9 und die Mitnahmen 5, 6 an den Federn 7 des Federsystems 4 an. Die Fliegerringe 8, 9 sind hierbei so ausgebildet, dass sie mit den beiden Ringteilen 64 und 65 gleichzeitig etwa mittig an der Feder angreifen. Die beiden Ringteile 64 und 65 des Fliegerrings 8 bzw. 9 sind daher mittels der Niete 26 miteinander verbunden. Die Mitnahmen 5 und 6 greifen jedoch unabhängig voneinander an den Federn 7 an und sind daher relativ zueinander beweglich.

Damit jeweils eine der Mitnahmen in der Mitte der Federn angreifen kann, weisen die Mitnahmen von einem Ring 65 radial nach außen vorstehende Federhalter 66 auf, die vom zentralen Ring 65 axial zur Federmitte hin gebogen sind.

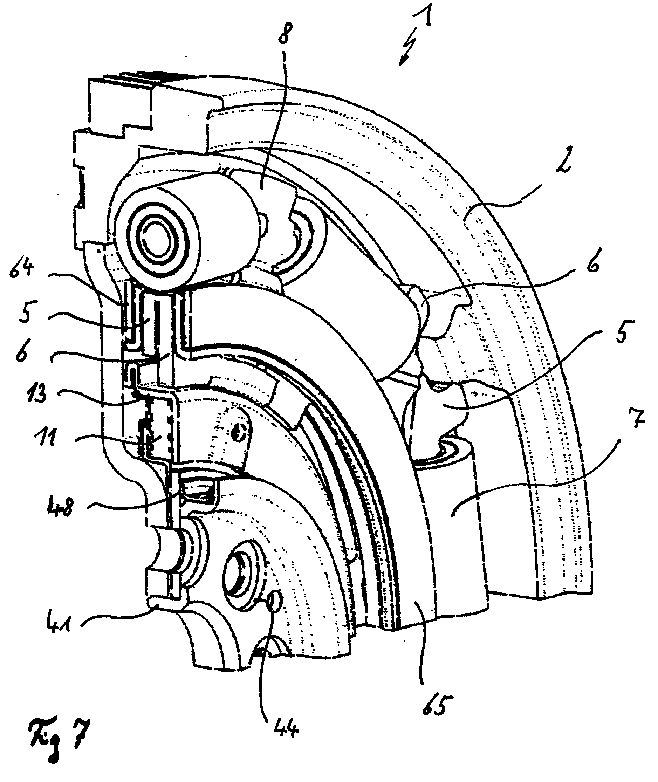

Die Figur 7 zeigt an einem Ausschnitt des Zweimassenschwungrades 1 mit entfernter Sekundärmasse 3 noch einmal deutlich, wie die einzelnen Teile in der topfartig geformten Primärmasse 2 angeordnet sind. Radial innen sind die großen Bohrungen 44 im Zentralflansch 41 zu erkennen, die dazu geeignet sind, Schraubenköpfe aufzunehmen. Radial weiter außen ist die Lagerschale 48 zu erkennen, von der in dieser Ansicht die Sekundärmasse 3 entfernt wurde. Weiter radial außen liegen die Keile 11 mit ihren strukturierten axialen Anlagenflächen und auf dem Zentrierblech 13 abgestützt liegen die Mitnahmen 5 und 6 sowie die Ringteile 64 und 65 des Fliegerringes 8. Die dreidimensionale Ansicht zeigt, wie die Mitnahmen 5 und 6 und der Fliegerring 8 mit den Federn 7 zusammenwirken, um diese zu halten bzw. mit Hilfe der Mitnahmen Kräfte auf die Federn auszuüben.

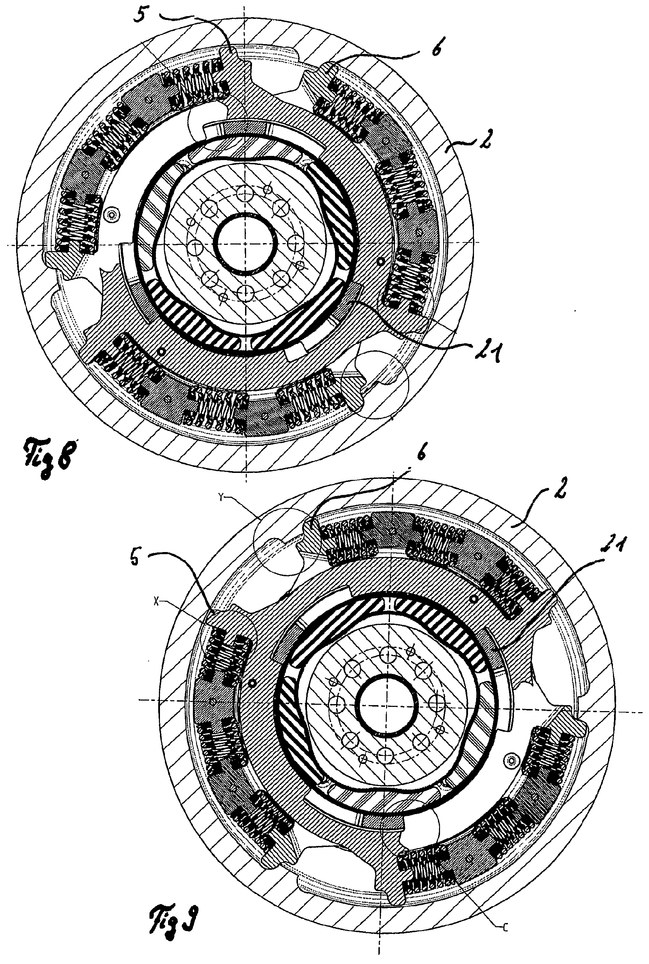

Die Figuren 8 und 9 zeigen das in Figur 1 gezeigte Zweimassenschwungrad mit verschiedenen Positionen der Mitnahmen. Hieraus ist zu erkennen, wie die Mitnahmen 5 und 6 mit der Primärmasse 2 und den Vorstehern 21 der Sekundärmasse 3 zusammenwirken.

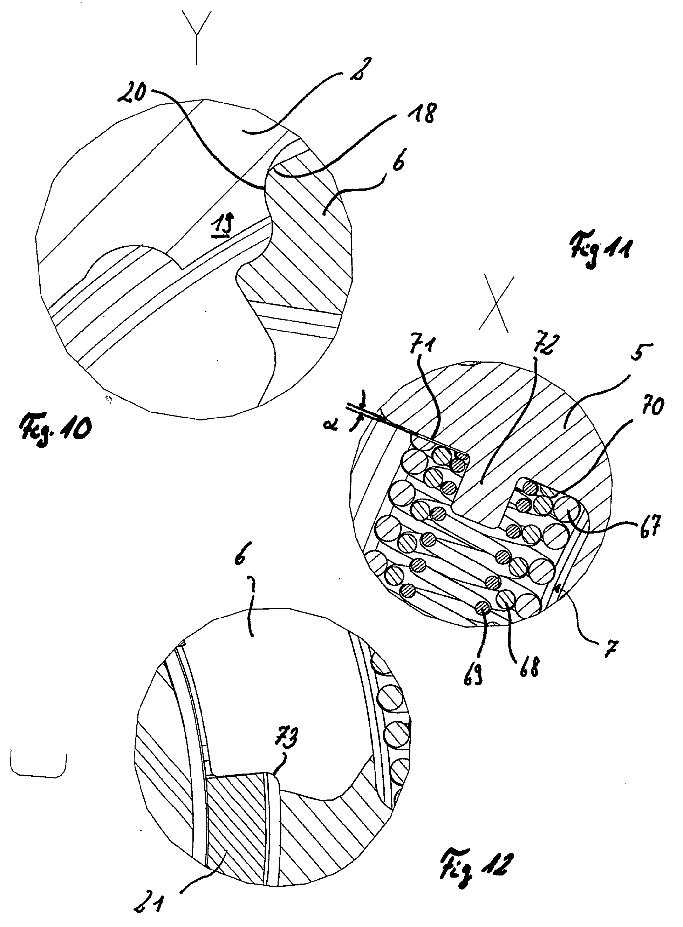

Das in Figur 10 gezeigte Detail zeigt die Anlage zwischen der Primärmasse 2 und einer Mitnahme 6. Die Nase 19 der Primärmasse 3 hat eine konkav bogenförmige Anlagefläche 20, die mit dem konvex bogenförmig ausgebildeten dritten Bereich 18 der Mitnahme 6 zusammenwirkt. Die Kurvenform der Anlagefläche 20 und des dritten Bereichs 18 der Mitnahme 6 sind so geformt, dass sich die Mitnahme 6 und die Primärmasse 2 auf einer Fläche berühren und Spiel für ein Aufeinandertreffen neben dieser Fläche verbleibt.

Der in Figur 11 gezeigte Ausschnitt zeigt die Anlage einer Feder 7 an einer Mitnahme 5. Die Feder 7 ist als Federpaket aus radial ineinanderliegenden Spiralfedern ausgebildet. Von den radial ineinanderliegenden Spiralfedern hat die äußere Feder die größte Federdrahtstärke. Die koaxial in der äußeren Feder angeordnete mittlere Feder hat eine mittlere Federdrahtstärke und die hierzu koaxial angeordnete innerste Feder hat eine noch geringere Federdrahtstärke.

Die Federn 67, 68 und 69 liegen radial innen im Bereich 70 an der Mitnahme 5 an und bilden radial außen zwischen ihren Endflächen und einem Bereich 71 der Mitnahme 5 einen Winkel α, der das Einsetzen der Federn erleichtert und dafür sorgt, dass die Federn nicht beidseitig des Dorns 72 gleichzeitig an die Mitnahme 5 anschlagen.

Die Figur 12 zeigt die Anlage des Vorstehers 21 der Sekundärmasse 3 an der Mitnahme 6. Auch hier weist die Mitnahme 6 einen gebogen ausgebildeten Bereich 73 auf, der dazu geeignet ist, die Mitnahme während des Anschlags relativ zum Vorsteher 21 mit einem gewissen Spiel zu positionieren.

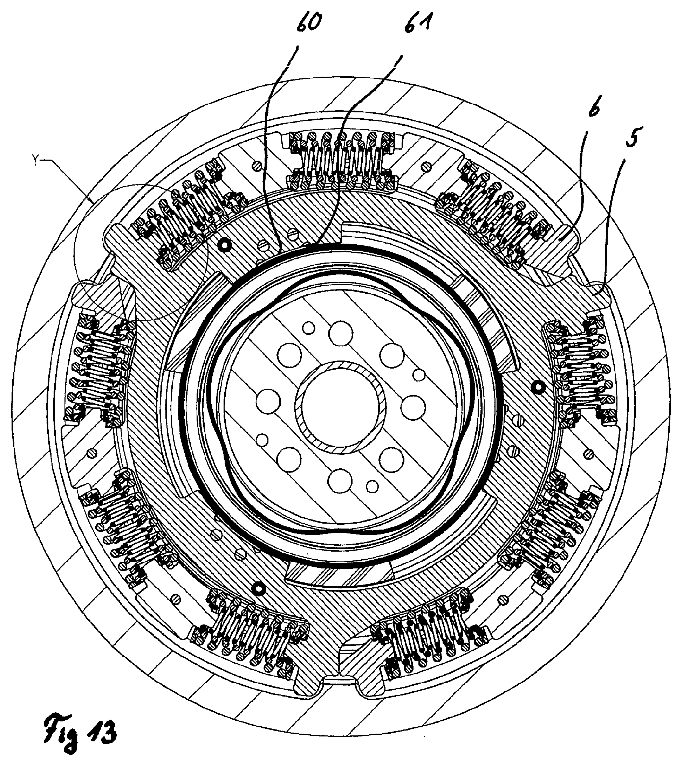

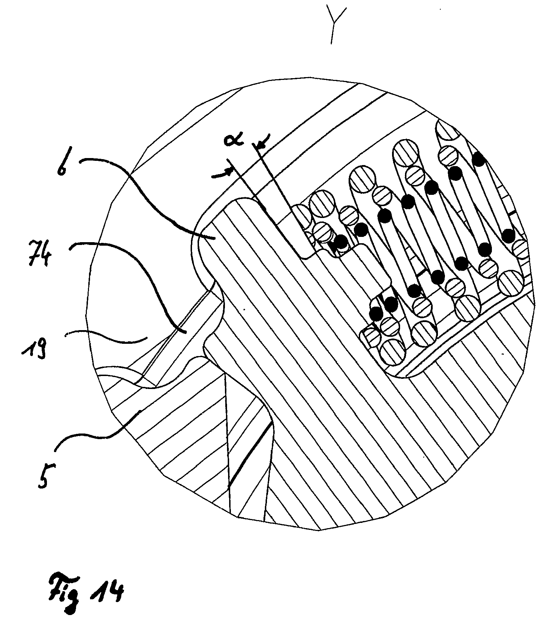

Die Figur 13 zeigt ein Zweimassenschwungrad mit gestufter Anlagefläche zwischen Mitnahme und Feder. Der in Figur 14 gezeigte Ausschnitt zeigt, wie die einzelnen ineinanderliegenden Federn an der gestuften Anlagefläche anliegen und mit der Anlagefläche wieder einen Winkel α bilden, der das Einlegen der Federn erleichtert. Darüber hinaus ist in Figur 14 zu erkennen, dass die Nase 19 der Primärmasse 2 ein Anlageelement 74 aufweist, welches mit den Mitnahmen 5 und 6 zusammenwirkt. Das Anlageelement 74 kann beispielsweise aus einem elastischen Material wie beispielsweise Gummi hergestellt sein.

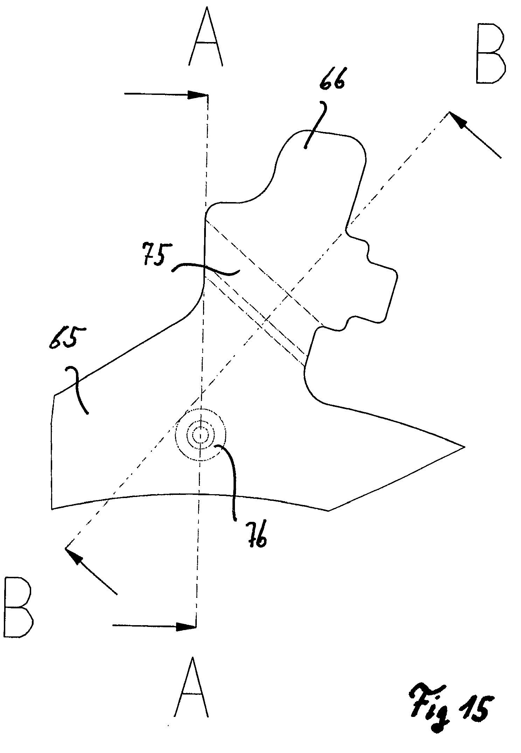

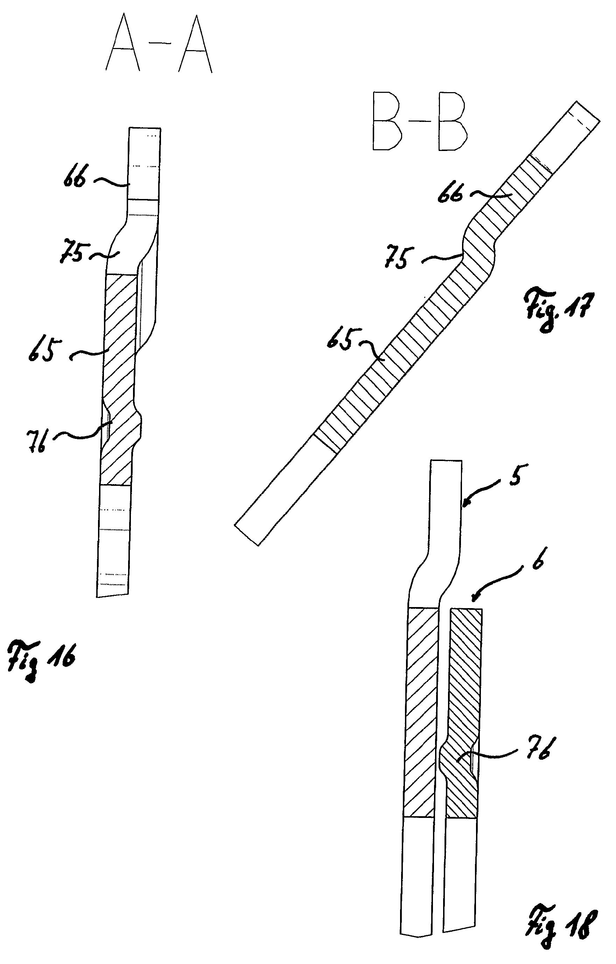

Die Figuren 15 bis 18 zeigen, dass die Mitnahmen 5 bzw. 6 einen zentralen Ring 65 und nach radial außen vorstehende Federhalter 66 aufweisen. Zwischen Ring 65 und Federhalter 66 ist eine Stufe 75, durch die der Federhalter 66 axial versetzt zum Ring 65 angeordnet ist. Darüber hinaus ist am zentralen Ring 65 eine Durchsetzung 76 vorgesehen, die als Anlagefläche dienen kann, wenn die zwei Mitnahmen 5 und 6 nebeneinander angeordnet werden.

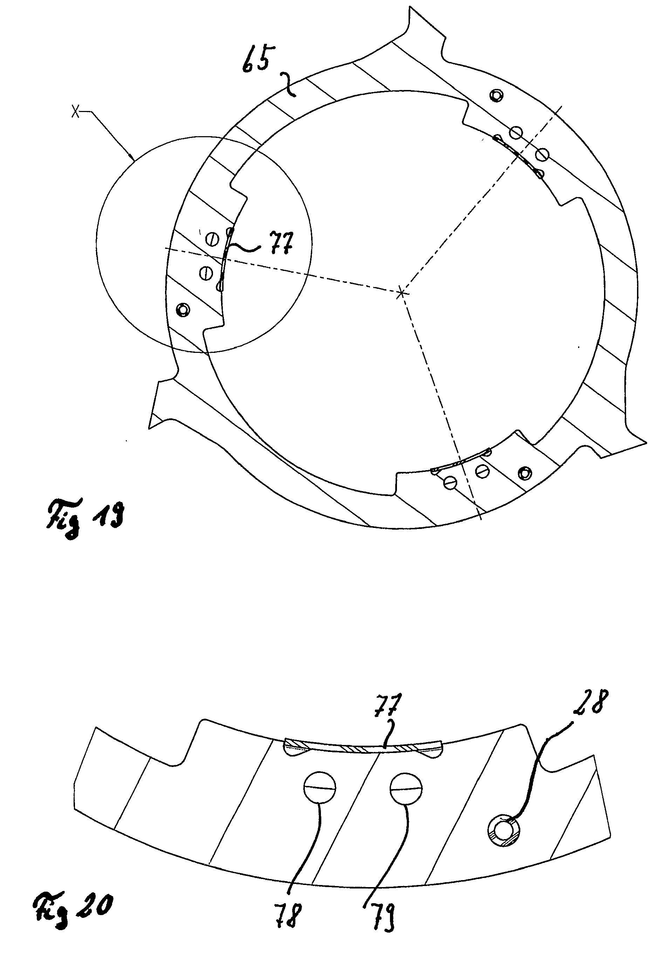

Die Figuren 19 und 20 zeigen, wie am zentralen Ring 65 Lagerflächen 75 angegossen werden können. Hierzu wurden Bohrungen 78, 79 vorgesehen, die es erlauben, die Lagerfläche 77 besser zu halten. Die Berührung der zentralen Ringe 65 zweier Mitnahmen aneinander wird hier durch die Kunststoffformkörper 28 verhindert.

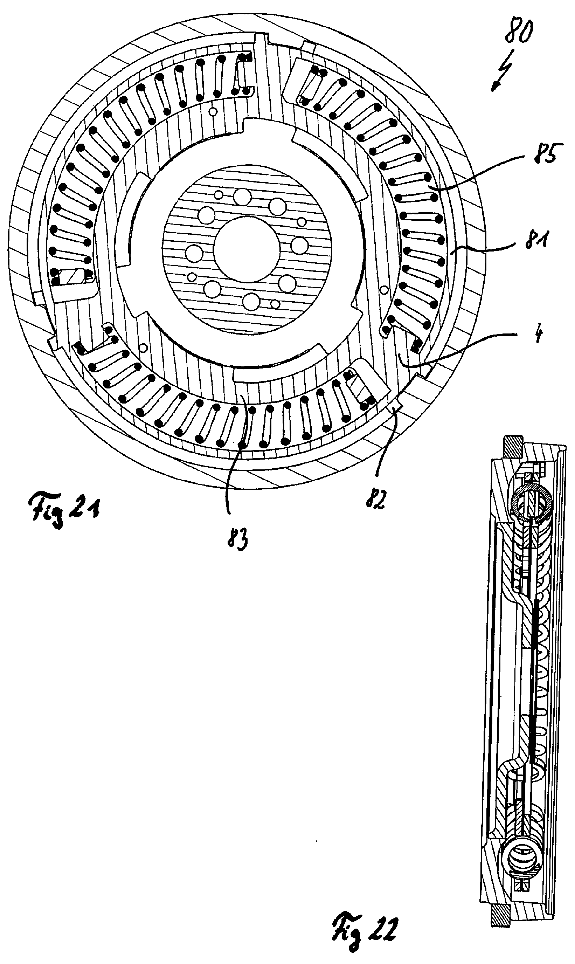

Die Figuren 21 und 22 zeigen eine andere Ausführungsform eines Zweimassenschwungrades 80, das im Wesentlichen wie das in Figur 1 gezeigte Zweimassenschwungrad 1 aufgebaut ist. Das Zweimassenschwungrad 80 hat jedoch nur drei gebogene Federn und benötigt daher keine Flieger. Dadurch wird der in der Figur 22 besser ersichtliche Aufbau vereinfacht. Die Elemente des Aufbaus und die Funktion des Zweimassenschwungrades 80 entsprechen jedoch dem in Figur 1 gezeigten Zweimassenschwungrad.

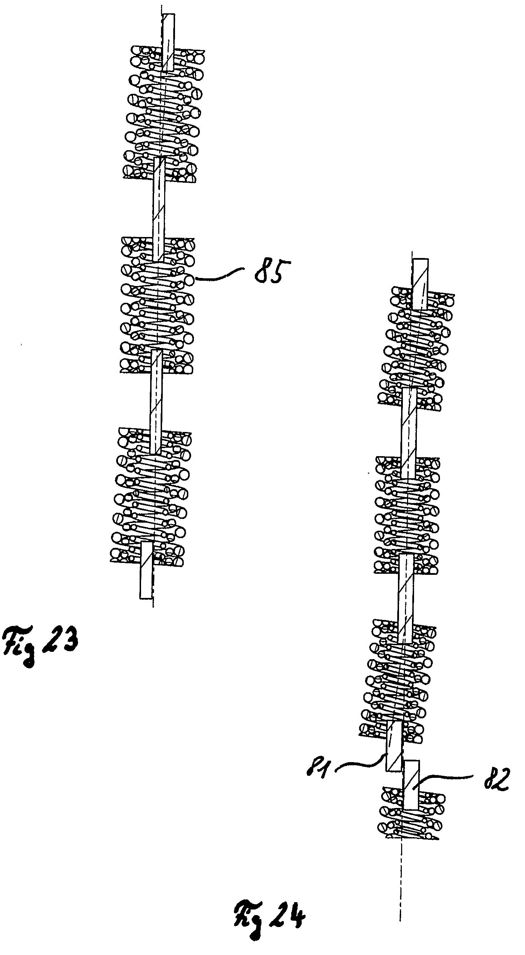

Bei dem in den Figuren 1 und 22 zeigten Zweimassenschwungrad 80 sind die Mitnahmen 81 und 82 eben ausgeführt. Die Mitnahmen haben daher zwischen dem zentralen Ring 83 und dem Federhalter 84 keine Stufe. Dies führt dazu, dass die zwischen den Federhaltern 81 und 82 angeordneten Federn wie in Figur 23 gezeigt leicht schräg liegen. Sofern die Federn 85 durch die Mitnahmen komprimiert werden, können die Mitnahmen 81 und 82 sogar nebeneinander, wie in Figur 24 gezeigt, zum Liegen kommen.

## Patentansprüche

1. Zweimassenschwungrad (1) mit einer Primärmasse (2), einem Federsystem (4) und einer Sekundärmasse (3) sowie einer zum Federsystem (4) koaxial gelagerten Mitnahme (5, 6), die in einem ersten Bereich mit dem Federsystem (4) und in einem zweiten Bereich mit der Sekundärmasse (3) in Wirkverbindung treten kann, **dadurch gekennzeichnet, dass** sie einen dritten Bereich mit einer primären Anlagefläche (16, 18) aufweist, der mit der Primärmasse (2) über eine Anlagefläche (20, 22) der Primärmasse (2) in Wirkverbindung treten kann, wobei an der primären Anlagefläche (16, 18) ein federndes Element angeordnet ist.

2. Zweimassenschwungrad nach Anspruch 1, **dadurch gekennzeichnet, dass** die Anlagefläche (20, 22) der Primärmasse an einer Nase (19) der Primärmasse angeordnet ist.

3. Zweimassenschwungrad nach Anspruch 1, **dadurch gekennzeichnet, dass** es eine erste und eine zweite Mitnahme (5, 6) aufweist.

4. Zweimassenschwungrad nach einem der vorhergehenden Ansprüche, **dadurch gekennzeichnet, dass** Primärmasse (2) und Sekundärmasse (3) einen gemeinsamen Drehpunkt aufweisen und die Mitnahme um diesen Drehpunkt drehbar gelagert ist.

5. Zweimassenschwungrad nach einem der vorhergehenden Ansprüche, **dadurch gekennzeichnet, dass** eine Mitnahme eine im Wesentlichen ringförmige Form aufweist.

6. Zweimassenschwungrad nach einem der Ansprüche 2 bis 5, **dadurch gekennzeichnet, dass** die ersten mit einem Federsystem in Verbindung stehenden Bereiche von zwei Mitnahmen durch Endanschläge begrenzt aufeinander zu bewegbar sind.

7. Zweimassenschwungrad nach Anspruch 6, **dadurch gekennzeichnet, dass** ein Endanschlag an einer radial innenliegenden Fläche der Mitnahme angeordnet ist.

8. Zweimassenschwungrad nach einem der Ansprüche 6 oder 7, **dadurch gekennzeichnet, dass** die Endanschläge ein federndes Element aufweisen.

9. Zweimassenschwungrad nach einem der Ansprüche 6 bis 8, **dadurch gekennzeichnet, dass** die Endanschläge ein dämpfendes Element aufweisen.

10. Zweimassenschwungrad nach einem der vorhergehenden Ansprüche, **dadurch gekennzeichnet, dass** die Mitnahme gehärtete Elemente aufweist.

11. Zweimassenschwungrad nach einem der vorhergehenden Ansprüche, **dadurch gekennzeichnet, dass** der erste mit einem Federsystem in Wirkverbindung stehende Bereich der Mitnahme in einem Winkel α zur Stirnseite einer Feder ausgebildet ist.

12. Zweimassenschwungrad nach einem der vorhergehenden Ansprüche, **dadurch gekennzeichnet, dass** der erste mit einem Federsystem in Wirkverbindung stehende Bereich der Mitnahme beabstandet zum Federsystem angeordnet ist.

13. Zweimassenschwungrad nach einem der vorhergehenden Ansprüche, **dadurch gekennzeichnet, dass** die Federn so gehalten sind, dass sie auch im Betrieb des Zweimassenschwungrades die Primärseite nicht berühren.

14. Zweimassenschwungrad nach einem der vorhergehenden Ansprüche, **dadurch gekennzeichnet, dass** es eine Reibeinrichtung aufweist.

15. Zweimassenschwungrad nach Anspruch 14, **dadurch gekennzeichnet, dass** die Reibeinrichtung radial innerhalb des Federsystems angeordnet ist.

16. Zweimassenschwungrad nach einem der Ansprüche 14 oder 15, **dadurch gekennzeichnet, dass** die Reibeinrichtung sich im Betrieb verspannende Keile aufweist.

17. Zweimassenschwungrad nach einem der Ansprüche 14 bis 16, **dadurch gekennzeichnet, dass** die Reibeinrichtung mindestens zwei, vorzugsweise drei oder mehr Keile aufweist.

18. Zweimassenschwungrad nach einem der Ansprühe 14 bis 17, **dadurch gekennzeichnet, dass** die Reibeinrichtung ein mit der Primärmasse verbundenes Exzenterblech aufweist.

19. Zweimassenschwungrad nach einem der Ansprüche 14 bis 18, **dadurch gekennzeichnet, dass** die Reibeinrichtung eine mit der Sekundärseite verbundene Zentrierung aufweist.

20. Zweimassenschwungrad nach einem der vorhergehenden Ansprüche, **dadurch gekennzeichnet, dass** die Primärmasse mit einem Zentralflansch in Verbindung steht und Bohrungen zur Befestigung der Primärmasse mittels Schrauben an einer Kurbelwelle aufweist, wobei der Zentralflansch mit den Bohrungen fluchtende Öffnungen aufweist, die größer sind als ein Schraubenkopf.

21. Zweimassenschwungrad nach einem der vorhergehenden Ansprüche, **dadurch gekennzeichnet, dass** das Federsystem mehrere Federn und mindestens einen Fliegerring aufweist, der die Federn gegen Radialkräfte hält.

## Claims

1. A dual mass flywheel (1) having a primary mass (2), a spring system (4) and a secondary mass (3) and also a driver (5, 6) mounted coaxially to the spring system (4), which can enter into operative connection with the spring system (4) in a first region and with the secondary mass (3) in a second region, **characterised in that** it has a third region with a primary bearing face (16, 18), which can enter into operative connection with the primary mass (2) by means of a bearing face (20, 22) of the primary mass (2), wherein a resilient element is arranged on the primary bearing face (16, 18).

2. The dual mass flywheel according to claim 1, **characterised in that** the bearing face (20, 22) of the primary mass is arranged on a nose (19) of the primary mass.

3. The dual mass flywheel according to claim 1, **characterised in that** it has a first and a second driver (5, 6).

4. The dual mass flywheel according to one of the preceding claims, **characterised in that** primary mass (2) and secondary mass (3) have a common pivot point and the driver is mounted rotatably about this pivot point.

5. The dual mass flywheel according to one of the preceding claims, **characterised in that** one driver has an essentially annular shape.

6. The dual mass flywheel according to one of claims 2 to 5, **characterised in that** the first regions that are connected to a spring system can be moved towards one another by means of drivers in a manner limited by end stops.

7. The dual mass flywheel according to claim 6, **characterised in that** an end stop is arranged on a radially inner surface of the driver.

8. The dual mass flywheel according to one of claims 6 or 7, **characterised in that** the end stops have a resilient element.

9. The dual mass flywheel according to one of claims 6 to 8, **characterised in that** the end stops have a damping element.

10. The dual mass flywheel according to one of the preceding claims, **characterised in that** the driver has hardened elements.

11. The dual mass flywheel according to one of the preceding claims, **characterised in that** the first region of the driver that is in operative connection with a spring system is constructed at an angle α to the end face of a spring.

12. The dual mass flywheel according to one of the preceding claims, **characterised in that** the first region of the driver that is in operative connection with a spring system is arranged at a distance from the spring system.

13. The dual mass flywheel according to one of the preceding claims, **characterised in that** the springs are held in such a manner that they also do not contact the primary side during the operation of the dual mass flywheel.

14. The dual mass flywheel according to one of the preceding claims, **characterised in that** it has a friction device.

15. The dual mass flywheel according to claim 14, **characterised in that** the friction device is arranged radially inside the spring system.

16. The dual mass flywheel according to one of claims 14 or 15, **characterised in that** the friction device has wedges that are tensioned during operation.

17. The dual mass flywheel according to one of claims 14 to 16, **characterised in that** the friction device has at least two, preferably three or more wedges.

18. The dual mass flywheel according to one of claims 14 to 17, **characterised in that** the friction device has an eccentric plate connected to the primary mass.

19. The dual mass flywheel according to one of claims 14 to 18, **characterised in that** the friction device has a centring device connected to the secondary side.

20. The dual mass flywheel according to one of the preceding claims, **characterised in that** the primary mass is connected to a central flange and has holes for fastening the primary mass on a crankshaft by means of screws, wherein the central flange has openings flush with the holes, which are larger than a screw head.

21. The dual mass flywheel according to one of the preceding claims, **characterised in that** the spring system has a plurality of springs at least one pilot ring, which retains the springs counter to radial forces.

## Revendications

1. Volant bi-masse (1) avec une masse primaire (2), un système de ressorts (4) et une masse secondaire (3) ainsi qu'un entraînement (5, 6) monté coaxialement au système de ressorts (4), lequel peut entrer en liaison active avec le système de ressorts (4) dans une première zone, et avec la masse secondaire (3) dans une deuxième zone, **caractérisé en ce qu'**il présente une troisième zone avec une surface d'appui primaire (16, 18) qui peut entrer en liaison active avec la masse primaire (2) via une surface d'appui (20, 22) de la masse primaire (2), dans lequel un élément élastique est disposé sur la surface d'appui primaire (16, 18).

2. Volant bi-masse selon la revendication 1, **caractérisé en ce que** la surface d'appui (20, 22) de la masse primaire est disposée sur un talon (19) de la masse primaire.

3. Volant bi-masse selon la revendication 1, **caractérisé en ce qu'**il présente un premier et un deuxième entraînement (5, 6).

4. Volant bi-masse selon l'une des revendications précédentes, **caractérisé en ce que** la masse primaire (2) et la masse secondaire (3) présentent un centre de rotation commun et **en ce que** l'entraînement est monté de manière rotative autour de ce centre de rotation.

5. Volant bi-masse selon l'une des revendications précédentes, **caractérisé en ce qu'**un entraînement présente une forme sensiblement annulaire.

6. Volant bi-masse selon l'une des revendications 2 à 5, **caractérisé en ce que** les premières zones, en liaison avec un système de ressorts, de deux entraînements peuvent être déplacées l'une vers l'autre de façon limitée grâce à des butées de fin de course.

7. Volant bi-masse selon la revendication 6, **caractérisé en ce qu'**une butée de fin de course est disposée sur une surface située radialement à l'intérieur de l'entraînement.

8. Volant bi-masse selon l'une des revendications 6 ou 7, **caractérisé en ce que** les butées de fin de course présentent un élément élastique.

9. Volant bi-masse selon l'une des revendications 6 à 8, **caractérisé en ce que** les butées de fin de course présentent un élément amortisseur.

10. Volant bi-masse selon l'une des revendications précédentes, **caractérisé en ce que** l'entraînement présente des éléments durcis.

11. Volant bi-masse selon l'une des revendications précédentes, **caractérisé en ce que** la première zone, en liaison active avec un système de ressorts, de l'entraînement est réalisée selon un angle α par rapport à la face frontale d'un ressort.

12. Volant bi-masse selon l'une des revendications précédentes, **caractérisé en ce que** la première zone, en liaison active avec un système de ressorts, de l'entraînement est disposée à distance du système de ressorts.

13. Volant bi-masse selon l'une des revendications précédentes, **caractérisé en ce que** les ressorts sont maintenus de manière à ne pas toucher le côté primaire également lors du fonctionnement du volant bi-masse.

14. Volant bi-masse selon l'une des revendications précédentes, **caractérisé en ce qu'**il présente un dispositif de friction.

15. Volant bi-masse selon la revendication 14, **caractérisé en ce que** le dispositif de friction est disposé radialement à l'intérieur du système de ressorts.

16. Volant bi-masse selon l'une des revendications 14 ou 15, **caractérisé en ce que** le dispositif de friction présente des clavettes se déformant lors du fonctionnement.

17. Volant bi-masse selon l'une des revendications 14 à 16, **caractérisé en ce que** le dispositif de friction présente au moins deux, de préférence trois ou davantage de clavettes.

18. Volant bi-masse selon l'une des revendications 14 à 17, **caractérisé en ce que** le dispositif de friction présente une tôle d'excentrique reliée à la masse primaire.

19. Volant bi-masse selon l'une des revendications 14 à 18, **caractérisé en ce que** le dispositif de friction présente un centrage relié au côté secondaire.

20. Volant bi-masse selon l'une des revendications précédentes, **caractérisé en ce que** la masse primaire est en liaison avec une bride centrale et présente des perçages pour la fixation de la masse primaire sur un vilebrequin à l'aide de vis, dans lequel la bride centrale présente des ouvertures en alignement avec les perçages, lesquelles sont plus grandes qu'une tête de vis.

21. Volant bi-masse selon l'une des revendications précédentes, **caractérisé en ce que** le système de ressorts présente plusieurs ressorts et au moins un anneau volant (« fliegerring ») qui maintient les ressorts à l'encontre de forces radiales.
